# EUROPEAN PATENT APPLICATION

(11) **EP 4 130 060 A1**
(43) Date of publication of application: **08.02.2023**
(21) Application number: 21781610.7
(22) Date of filing: 22.03.2021
(51) Int. Cl.: C08F 12/30, C08F 20/04, C08F 22/02, C08L 101/14, H01M 4/134, H01M 4/1395, H01M 4/38, H01M 4/62

(54) **BINDER COMPOSITION FOR NON-AQUEOUS SECONDARY BATTERY, SLURRY COMPOSITION FOR NON-AQUEOUS SECONDARY BATTERY ELECTRODE, ELECTRODE FOR NON-AQUEOUS SECONDARY BATTERY, AND NON-AQUEOUS SECONDARY BATTERY**

(30) Priority: 31.03.2020 JP 2020063654
(71) Applicant: Zeon Corporation, Tokyo 100-8246 (JP)
(72) Inventor: OSHIMA Hiroki, Tokyo 100-8246 (JP); ADACHI Yusuke, Tokyo 100-8246 (JP)
(74) Representative: Maiwald GmbH
(86) International application number: PCT/JP2021/011778
(87) International publication number: WO 2021/200350

(57) **Abstract**

Provided is a binder composition that can result in high peel strength in an electrode and excellent cycle characteristics in a secondary battery. A binder composition for a non-aqueous secondary battery contains a water-soluble polymer (A) and a water-soluble polymer (B). The water-soluble polymer (A) is formed of one or more types of units selected from the group consisting of unsaturated carboxylic acid monomer units, unsaturated carboxylic acid amide monomer units, unsaturated carboxylic acid ester monomer units, hydroxyl group-containing vinyl monomer units, and vinyl alcohol structural units, and includes a predetermined amount of unsaturated carboxylic acid monomer units. The water-soluble polymer (B) is formed of one or more types of ethylenically unsaturated monomer units, and includes a predetermined amount of sulfo group-containing aromatic vinyl monomer units. The weight-average molecular weight of the water-soluble polymer (A) is 4 times or more the weight-average molecular weight of the water-soluble polymer (B).

## Description

### TECHNICAL FIELD

The present disclosure relates to a binder composition for a non-aqueous secondary battery, a slurry composition for a non-aqueous secondary battery electrode, an electrode for a non-aqueous secondary battery, and a non-aqueous secondary battery.

### BACKGROUND

Non-aqueous secondary batteries such as lithium ion secondary batteries have characteristics such as compact size, light weight, high energy density, and the ability to be repeatedly charged and discharged, and are used in a wide variety of applications. Consequently, in recent years, studies have been made to improve battery members such as electrodes for the purpose of achieving even higher non-aqueous secondary battery performance.

An electrode for a lithium ion secondary battery, for example, generally includes a current collector and an electrode mixed material layer formed on the current collector. The electrode mixed material layer may, for example, be formed by applying, onto the current collector, a slurry composition that is obtained by mixing an electrode active material, a binder-containing binder composition, and so forth, and then drying the slurry composition so as to bind the electrode active material and the like through the binder.

Patent Literature (PTL) 1 proposes using a water-soluble polymer that is a copolymer including specific amounts of aromatic vinyl monomer units, unsaturated carboxylic acid monomer units, and cross-linkable monomer units as a binder composition used to form an electrode mixed material layer, and gives sodium styrenesulfonate monomer as an example of an aromatic vinyl monomer unit.

Moreover, PTL 2 proposes compounding a water-soluble polymer including a specific amount of (meth)acrylamide monomer units and a compound such as an unsaturated carboxylic acid or an unsaturated amide in a binder composition, and gives monomers such as (meth)acrylic acid monomer and vinyl sulfonic acid as examples of copolymer components of the water-soluble polymer (refer to PTL 2).

### CITATION LIST

### Patent Literature

PTL 1: WO2013/080938A1
PTL 2: JP2015-118908A

### SUMMARY

### (Technical Problem)

It is desirable for a binder composition for a non-aqueous secondary battery to result in high peel strength in an electrode and excellent cycle characteristics in a secondary battery. In terms of these points, there is still room for improvement of the conventional techniques described above.

An object of the present disclosure is to provide a binder composition for a non-aqueous secondary battery that can result in high peel strength in an electrode and excellent cycle characteristics in a secondary battery.

### (Solution to Problem)

The inventors conducted diligent studies aimed at achieving the object set forth above, and thereby completed the present disclosure.

Specifically, the present disclosure aims to advantageously solve the problem set forth above, and relates to a binder composition for a non-aqueous secondary battery comprising a water-soluble polymer (A) and a water-soluble polymer (B), wherein
the water-soluble polymer (A) is formed of one or more types of units selected from the group consisting of unsaturated carboxylic acid monomer units, unsaturated carboxylic acid amide monomer units, unsaturated carboxylic acid ester monomer units, hydroxyl group-containing vinyl monomer units, and vinyl alcohol structural units, and includes 5 parts by mass or more of unsaturated carboxylic acid monomer units in 100 parts by mass of the water-soluble polymer (A),
the water-soluble polymer (B) is formed of one or more types of ethylenically unsaturated monomer units, and includes 5 parts by mass or more of sulfo group-containing aromatic vinyl monomer units in 100 parts by mass of the water-soluble polymer (B), and
weight-average molecular weight of the water-soluble polymer (A) is 4 times or more weight-average molecular weight of the water-soluble polymer (B).

It is presumed that by creating a difference of 4 times or more between the weight-average molecular weights of the water-soluble polymer (A) and the water-soluble polymer (B), preservation stability upon formation of a slurry composition and functionality as a binder in an electrode or secondary battery can be sufficiently ensured mainly through the water-soluble polymer (A) having a relatively large weight-average molecular weight while also improving dispersibility of an electrode active material and the like upon formation of a slurry composition mainly through sulfo groups included in the water-soluble polymer (B), and thus the presently disclosed binder composition for a non-aqueous secondary battery results in high peel strength in an electrode and also results in excellent cycle characteristics in a secondary battery.

The water-soluble polymer (A) is formed of one or more types of units selected from the group consisting of unsaturated carboxylic acid monomer units, unsaturated carboxylic acid amide monomer units, unsaturated carboxylic acid ester monomer units, hydroxyl group-containing vinyl monomer units, and vinyl alcohol structural units, includes 5 parts by mass or more of unsaturated carboxylic acid monomer units in 100 parts by mass of the water-soluble polymer (A), and may include 100 parts by mass of unsaturated carboxylic acid monomer units in 100 parts by mass of the water-soluble polymer (A).

The water-soluble polymer (B) is formed of one or more types of ethylenically unsaturated monomer units, includes 5 parts by mass or more of sulfo group-containing aromatic vinyl monomer units in 100 parts by mass of the water-soluble polymer (B), and may include 100 parts by mass of sulfo group-containing aromatic vinyl monomer units in 100 parts by mass of the water-soluble polymer (B).

When a polymer is referred to as "water-soluble" in the present disclosure, this means that when 0.5 g of the polymer is dissolved in 100 g of water at a temperature of 25°C, insoluble content is less than 1.0 mass%.

The phrase "includes a monomer unit" as used in the present disclosure means that "a polymer obtained with that monomer includes a repeating unit derived from the monomer". The proportional contents of "monomer units" (inclusive of "structural units") in a polymer referred to in the present disclosure can be measured by a nuclear magnetic resonance (NMR) method such as ¹H-NMR.

An "ethylenically unsaturated monomer" referred to in the present disclosure corresponds to a compound that includes an ethylenically unsaturated bond. Ethylenically unsaturated monomers are inclusive of aromatic vinyl monomers, and aromatic vinyl monomers are inclusive of sulfo group-containing aromatic vinyl monomers.

An "unsaturated carboxylic acid monomer" referred to in the present disclosure corresponds to an unsaturated carboxylic acid that includes an ethylenically unsaturated bond and is inclusive of an anhydride thereof.

An "unsaturated carboxylic acid amide monomer" referred to in the present disclosure corresponds to an amide of an unsaturated carboxylic acid that includes an ethylenically unsaturated bond, and corresponds to a compound having a chemical structure in which an unsaturated carboxylic acid has undergone dehydration condensation with ammonia, a primary amine, or a secondary amine.

An "unsaturated carboxylic acid ester monomer" referred to in the present disclosure corresponds to an ester of an unsaturated carboxylic acid that includes an ethylenically unsaturated bond, and corresponds to a compound having a chemical structure in which an unsaturated carboxylic acid has undergone condensation with a compound including a hydroxyl group.

A "sulfo group-containing aromatic vinyl monomer" referred to in the present disclosure corresponds to an aromatic vinyl compound that includes a sulfo group (-SO₃H).

Herein, in a case in which a carboxy group (-COOH) or a sulfo group (-SO₃H) is present in a monomer or a polymer, the carboxy group or sulfo group may be in the form of a salt, inclusive of alkali metal salts (Na salt, K salt, Li salt, etc.), alkaline earth metal salts (Mg salt, etc.), an ammonium salt, and so forth.

The weight-average molecular weight referred to in the present disclosure can be measured by a method described in the EXAMPLES section.

A mass ratio of the water-soluble polymer (A) relative to the water-soluble polymer (B) (mass of water-soluble polymer (A)/mass of water-soluble polymer (B)) can be not less than 55/45 and not more than 99/1. When the mass ratio is within the range set forth above, this is advantageous for bringing about high peel strength in an electrode and excellent cycle characteristics in a secondary battery.

The weight-average molecular weight of the water-soluble polymer (B) can be not less than 2,000 and not more than 300,000. When the weight-average molecular weight is within the range set forth above, this is advantageous in terms of improving dispersibility of an electrode active material and the like upon formation of a slurry composition.

The water-soluble polymer (A) can be formed of one or more types of units selected from the group consisting of unsaturated carboxylic acid monomer units, (meth)acrylamide monomer units, hydroxyl group-containing vinyl monomer units, and vinyl alcohol structural units, and include 5 parts by mass or more of unsaturated carboxylic acid monomer units in 100 parts by mass of the water-soluble polymer (A).

The water-soluble polymer (B) can be formed of one or more types of units selected from the group consisting of (meth)acrylamide monomer units and aromatic vinyl monomer units, and include 5 parts by mass or more of sulfo group-containing aromatic vinyl monomer units in 100 parts by mass of the water-soluble polymer (B).

Moreover, the present disclosure aims to advantageously solve the problem set forth above, and relates to a slurry composition for a non-aqueous secondary battery electrode comprising: an electrode active material; and the binder composition for a non-aqueous secondary battery set forth above. The presently disclosed slurry composition has excellent dispersibility of the electrode active material and the like and has sufficiently inhibited gelation and solid content sedimentation during preservation (i.e., has excellent preservation stability) as a result of containing the presently disclosed binder composition. By using the presently disclosed slurry composition, it is possible to produce an electrode having high peel strength and to bring about excellent cycle characteristics in a secondary battery.

The electrode active material can be a negative electrode active material containing one or more selected from the group consisting of Si, Sn, Ge, Pb, Al, and Li. These negative electrode active materials display significant expansion and contraction in accompaniment to charging and discharging of a secondary battery. However, even in a situation in which an electrode (negative electrode) is produced using such a negative electrode active material, it is possible to obtain an electrode (negative electrode) having high peel strength and to cause a secondary battery to display excellent cycle characteristics by using the presently disclosed slurry composition.

Furthermore, the present disclosure aims to advantageously solve the problem set forth above, and relates to an electrode for a non-aqueous secondary battery comprising an electrode mixed material layer formed using the slurry composition for a non-aqueous secondary battery electrode set forth above. The presently disclosed electrode has high peel strength and can result in excellent cycle characteristics in a secondary battery.

Also, the present disclosure aims to advantageously solve the problem set forth above, and relates to a non-aqueous secondary battery comprising the electrode for a non-aqueous secondary battery set forth above. The presently disclosed secondary battery has excellent cycle characteristics.

### (Advantageous Effect)

According to the present disclosure, a binder composition for a non-aqueous secondary battery is provided that can result in high peel strength in an electrode and excellent cycle characteristics in a secondary battery.

### DETAILED DESCRIPTION

The following provides a detailed description of embodiments of the present disclosure.

The presently disclosed binder composition for a non-aqueous secondary battery is used in production of a non-aqueous secondary battery such as a lithium ion secondary battery, for example, and can be used in production of a slurry composition for a non-aqueous secondary battery electrode.

The presently disclosed slurry composition for a non-aqueous secondary battery electrode is used in production of an electrode of a non-aqueous secondary battery such as a lithium ion secondary battery, for example, and can be used in formation of an electrode mixed material layer.

The presently disclosed electrode for a non-aqueous secondary battery is used in a non-aqueous secondary battery such as a lithium ion secondary battery, for example.

### <Binder composition for non-aqueous secondary battery>

The presently disclosed binder composition for a non-aqueous secondary battery contains a water-soluble polymer (A) and a water-soluble polymer (B), wherein the weight-average molecular weight of the water-soluble polymer (A) is 4 times or more the weight-average molecular weight of the water-soluble polymer (B).

### [Water-soluble polymer (A)]

The water-soluble polymer (A) is not specifically limited so long as it is a polymer that is formed of one or more types of units selected from the group consisting of unsaturated carboxylic acid monomer units, unsaturated carboxylic acid amide monomer units, unsaturated carboxylic acid ester monomer units, hydroxyl group-containing vinyl monomer units, and vinyl alcohol structural units, that includes 5 parts by mass or more of unsaturated carboxylic acid monomer units in 100 parts by mass of the polymer, and that is water-soluble as defined in the present specification.

### (Unsaturated carboxylic acid monomer units)

Although no specific limitations are placed on unsaturated carboxylic acid monomers that may be used, unsaturated carboxylic acid monomers that include a hydroxyl group other than -OH included in a carboxy group (-COOH) are excluded. The unsaturated carboxylic acid monomer units may be of a single type or may be a combination of two or more types in a freely selected ratio. A carboxy group (-COOH) of the unsaturated carboxylic acid monomer may be in the form of a salt, and, in this case, an alkali metal salt (Na salt, K salt, Li salt, etc.) or an ammonium salt is preferable.

The unsaturated carboxylic acid monomer is preferably a monofunctional unsaturated carboxylic acid monomer that includes one ethylenically unsaturated bond.

Examples of unsaturated monocarboxylic acids include unsaturated aliphatic monocarboxylic acids such as acrylic acid, methacrylic acid, crotonic acid, maleic acid, fumaric acid, itaconic acid, 2-ethylacrylic acid, and isocrotonic acid. Moreover, α-acetoxyacrylic acid, β-trans-aryloxyacrylic acid, α-chloro-β-E-methoxyacrylic acid, β-diaminoacrylic acid, and the like can also be used.

Examples of unsaturated dicarboxylic acids include unsaturated aliphatic dicarboxylic acids such as maleic acid, fumaric acid, itaconic acid, maleic anhydride, diacrylic anhydride, methylmaleic anhydride, dimethylmaleic anhydride, and methylmaleic acid. Moreover, phenylmaleic acid, chloromaleic acid, dichloromaleic acid, fluoromaleic acid, and the like can also be used.

Acrylic acid and methacrylic acid are preferable as unsaturated carboxylic acid monomers in terms of enabling higher molecular weight of the polymer, and acrylic acid is more preferable.

The unsaturated carboxylic acid monomer units may be of a single type or may be a combination of two or more types in a freely selected ratio. Unsaturated carboxylic acid monomer units constitute 5 parts by mass or more in 100 parts by mass of the water-soluble polymer (A), and preferably constitute 20 parts by mass or more, and more preferably 30 parts by mass or more in 100 parts by mass of the water-soluble polymer (A) from a viewpoint of improving cycle characteristics in a secondary battery. Although unsaturated carboxylic acid monomer units may constitute 100 parts by mass, units other than unsaturated carboxylic acid monomer units may be included depending on the desired characteristics.

In a case in which units other than unsaturated carboxylic acid monomer units are included, these units may be of a single type or may be a combination of two or more types in a freely selected ratio. The following are given as examples of units other than unsaturated carboxylic acid monomer units.

### (Unsaturated carboxylic acid amide monomer units)

The inclusion of unsaturated carboxylic acid amide monomer units can easily inhibit gelation and solid content sedimentation in a slurry composition and can increase preservation stability of the slurry composition.

The unsaturated carboxylic acid amide monomer is not specifically limited and may be a compound having a chemical structure in which any of the compounds given above as examples of unsaturated carboxylic acid monomers has undergone dehydration condensation with ammonia, a primary amine, or a secondary amine. The primary amine may be methylamine, ethylamine, isopropylamine, isobutylamine, or the like, and the secondary amine may be dimethylamine, diethylamine, or the like.

### -(Meth)acrylamide monomer units

(Meth)acrylamide monomer units are preferable as unsaturated carboxylic acid amide monomer units. Herein, "(meth)acryl" is used to indicate "methacryl" and/or "acryl".

The (meth)acrylamide monomer may be a compound having a chemical structure in which (meth)acrylic acid has undergone dehydration condensation with ammonia, a primary amine, or a secondary amine.

The (meth)acrylamide monomer may be acrylamide, methacrylamide, N,N-dimethylacrylamide, N,N-dimethylmethacrylamide, N-isopropylacrylamide, N-isobutylacrylamide, or the like, is preferably acrylamide or methacrylamide because they can increase interactions between molecules through hydrogen bonding upon formation of a polymer, and is more preferably acrylamide.

### (Unsaturated carboxylic acid ester monomer units)

The inclusion of unsaturated carboxylic acid ester monomer units enables simple adjustment of the degree of swelling in electrolyte solution of the polymer to a suitable level.

The unsaturated carboxylic acid ester monomer is not specifically limited and may be a compound having a chemical structure in which any of the compounds given above as examples of unsaturated carboxylic acid monomers has undergone condensation with a compound including a hydroxyl group, such as an alcohol. The alcohol may be an alcohol having a carbon number of not less than 1 and not more than 10.

### -(Meth)acrylic acid ester monomer units

(Meth)acrylic acid ester monomer units are preferable as unsaturated carboxylic acid ester monomer units.

The (meth)acrylic acid ester monomer may be a (meth)acrylic acid alkyl ester (for example, an alkyl ester having a carbon number of not less than 1 and not more than 10) such as methyl (meth)acrylate, ethyl (meth)acrylate, n-propyl (meth)acrylate, isopropyl (meth)acrylate, n-butyl (meth)acrylate, isobutyl (meth)acrylate, sec-butyl (meth)acrylate, t-butyl (meth)acrylate, pentyl (meth)acrylate, hexyl (meth)acrylate, heptyl (meth)acrylate, or octyl (meth)acrylate (for example, 2-ethylhexyl (meth)acrylate).

### (Hydroxyl group-containing vinyl monomer units)

The inclusion of a hydroxyl group-containing vinyl monomer can easily improve dispersibility of an electrode active material and the like in a slurry composition and can easily ensure flexibility in an electrode.

The hydroxyl group-containing vinyl monomer is a vinyl compound that includes a hydroxyl group and examples thereof include unsaturated carboxylic acid monomers that include a hydroxyl group other than -OH included in a carboxy group (-COOH) and (meth)acrylamide monomers that include a hydroxyl group.

The hydroxyl group-containing vinyl monomer may be 2-hydroxyethyl acrylate, 2-hydroxyethyl methacrylate, 2-hydroxypropyl acrylate, 2-hydroxypropyl methacrylate, N-hydroxymethylacrylamide (N-methylolacrylamide), N-hydroxymethylmethacrylamide, N-hydroxyethylacrylamide, N-hydroxyethylmethacrylamide, or the like, is preferably 2-hydroxyethyl acrylate or 2-hydroxyethyl methacrylate because they can provide the polymer with high strength, and is more preferably 2-hydroxyethyl acrylate.

### (Vinyl alcohol structural units)

The inclusion of vinyl alcohol structural units can inhibit the occurrence of poor coating caused by foaming when a slurry composition is produced and can easily ensure flexibility in an electrode.

A vinyl alcohol structural unit is a structural unit represented by the following formula.

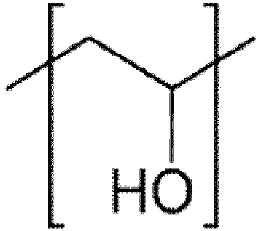

Vinyl alcohol structural units can be introduced into the water-soluble polymer through saponification of a polymer that includes vinyl ester monomer units, for example.

Examples of vinyl ester monomers that can form vinyl ester monomer units include vinyl formate, vinyl acetate, vinyl propionate, vinyl valerate, vinyl laurate, vinyl stearate, vinyl benzoate, vinyl pivalate, and vinyl versatate, with vinyl acetate and vinyl propionate being preferable, and vinyl acetate more preferable.

In a case in which the water-soluble polymer (A) includes monomer units other than unsaturated carboxylic acid monomer units, the water-soluble polymer (A) may be a water-soluble polymer that includes, in addition to unsaturated carboxylic acid monomer units, one or more types of units selected from the group consisting of unsaturated carboxylic acid amide monomer units, unsaturated carboxylic acid ester monomer units, hydroxyl group-containing vinyl monomer units, and vinyl alcohol structural units. In this case, these units constitute more than 0 parts by mass and not more than 95 parts by mass in 100 parts by mass of the water-soluble polymer (A), and can be set as not less than 5 parts by mass and not more than 95 parts by mass from a viewpoint of sufficiently obtaining the effects of inclusion of these units.

A water-soluble polymer formed of not less than 20 parts by mass and not more than 70 parts by mass of unsaturated carboxylic acid monomer units and not less than 30 parts by mass and not more than 80 parts by mass, in total, of one or more types of units selected from the group consisting of unsaturated carboxylic acid amide monomer units, unsaturated carboxylic acid ester monomer units, hydroxyl group-containing vinyl monomer units, and vinyl alcohol structural units relative to 100 parts by mass of the water-soluble polymer (A) is preferable, and a water-soluble polymer formed of not less than 20 parts by mass and not more than 50 parts by mass of unsaturated carboxylic acid monomer units and not less than 50 parts by mass and not more than 80 parts by mass, in total, of one or more types of units selected from the group consisting of unsaturated carboxylic acid amide monomer units, unsaturated carboxylic acid ester monomer units, hydroxyl group-containing vinyl monomer units, and vinyl alcohol structural units is more preferable.

The water-soluble polymer (A) may, for example, be a water-soluble polymer that includes, in addition to unsaturated carboxylic acid monomer units, one or more types of units selected from (meth)acrylamide monomer units, hydroxyl group-containing vinyl monomer units, and vinyl alcohol structural units. In this case, these monomer units can constitute more than 0 parts by mass and not more than 95 parts by mass in 100 parts by mass of the water-soluble polymer (A), and preferably constitute not less than 5 parts by mass and not more than 95 parts by mass from a viewpoint of sufficiently obtaining the effects of inclusion of these units.

A water-soluble polymer formed of not less than 20 parts by mass and not more than 70 parts by mass of unsaturated carboxylic acid monomer units and not less than 30 parts by mass and not more than 80 parts by mass, in total, of one or more types of units selected from (meth)acrylamide monomer units, hydroxyl group-containing vinyl monomer units, and vinyl alcohol structural units is preferable, and a water-soluble polymer formed of not less than 20 parts by mass and not more than 50 parts by mass of unsaturated carboxylic acid monomer units and not less than 50 parts by mass and not more than 80 parts by mass, in total, of one or more types of units selected from (meth)acrylamide monomer units, hydroxyl group-containing vinyl monomer units, and vinyl alcohol structural units is more preferable.

The combination of units selected from (meth)acrylamide monomer units, hydroxyl group-containing vinyl monomer units, and vinyl alcohol structural units may, for example, be a combination of (meth)acrylamide monomer units and hydroxyl group-containing vinyl monomer units.

### (Production of water-soluble polymer (A))

The production method of the water-soluble polymer (A) is not specifically limited, and a commonly known method can be adopted. For example, the water-soluble polymer (A) can be produced by polymerizing each monomer in a solvent and then performing saponification depending on the situation. The charging ratio of each monomer normally matches the ratio of monomer units (structural units) in the water-soluble polymer.

The polymerization can be performed using a polymerization initiator, a polymerization accelerator, an emulsifier, a dispersant, a chain transfer agent, and/or the like. The solution obtained after polymerization may be used to produce the binder composition in that form or may be used to produce the binder composition after performing solvent exchange, addition of optional components, and/or the like.

The solvent is preferably an aqueous solvent and may be water or a mixed solvent of water and a hydrophilic organic solvent. Aqueous solution polymerization using water as a solvent is preferable in terms of safety and that a solvent removal operation is not required. The aqueous solution polymerization can be performed using a polymerization initiator (for example, sodium persulfate, ammonium persulfate, or potassium persulfate) and a polymerization accelerator (for example, sodium L-ascorbate or sodium bisulfite). The pH of the aqueous solution is preferably adjusted to not lower than 7 and not higher than 9 after polymerization.

### [Water-soluble polymer (B)]

The water-soluble polymer (B) is not specifically limited so long as it is a polymer that is formed of one or more types of ethylenically unsaturated monomer units, that includes 5 parts by mass or more of sulfo group-containing aromatic vinyl monomer units in 100 parts by mass of the polymer, and that is water-soluble as defined in the present specification.

### (Sulfo group-containing aromatic vinyl monomer units)

The sulfo group (-SO₃H) containing aromatic vinyl monomer may be styrene sulfonic acid such as p-styrene sulfonic acid, 3-(2-vinylpyridinium-1-yl)propane-1-sulfonate, or the like, and is preferably styrene sulfonic acid.

The sulfo group-containing aromatic vinyl monomer may be in the form of a salt, and, in this case, is preferably an alkali metal salt (Na salt, K salt, Li salt, etc.), and more preferably a Na salt or a Li salt. More specifically, the sulfo group-containing aromatic vinyl monomer may be sodium styrenesulfonate or lithium styrenesulfonate.

The sulfo group-containing aromatic vinyl monomer units may be of a single type or may be a combination of two or more types in a freely selected ratio. Sulfo group-containing aromatic vinyl monomer units constitute 5 parts by mass or more in the water-soluble polymer (B), and preferably constitute 30 parts by mass or more, and more preferably 60 parts by mass or more in the water-soluble polymer (B) from a viewpoint of sufficiently imparting dispersibility of an electrode active material and the like in a slurry composition. Although sulfo group-containing aromatic vinyl monomer units may constitute 100 parts by mass, the water-soluble polymer (B) may include ethylenically unsaturated monomer units other than sulfo group-containing aromatic vinyl monomer units (hereinafter, also referred to as "other ethylenically unsaturated monomer units") depending on the desired characteristics.

### (Other ethylenically unsaturated monomer units)

In a case in which ethylenically unsaturated monomer units other than sulfo group-containing aromatic vinyl monomer units are included, these units may be of a single type or may be a combination of two or more types in a freely selected ratio. The following are given as examples of units other than sulfo group-containing aromatic vinyl monomer units.

### -Unsaturated carboxylic acid amide monomer units

The inclusion of unsaturated carboxylic acid amide monomer units can increase interactions between molecules through hydrogen bonding upon formation of a polymer. The unsaturated carboxylic acid amide monomer may be any of the compounds given as examples in relation to the previously described water-soluble polymer (A).

### -(Meth)acrylamide monomer units

In particular, (meth)acrylamide monomer units are preferable in terms of improving interactions.

The (meth)acrylamide monomer may be acrylamide, methacrylamide, N,N-dimethylacrylamide, N,N-dimethylmethacrylamide, N-isopropylacrylamide, N-isobutylacrylamide, or the like, is preferably acrylamide or methacrylamide, and is more preferably acrylamide.

### -Aromatic vinyl monomer (excluding sulfo group-containing monomers)

The inclusion of an aromatic vinyl monomer (excluding sulfo group-containing monomers) enables improvement of adsorbing ability of the polymer to an active material.

Examples of aromatic vinyl monomers (excluding sulfo group-containing monomers) include styrene, α-methylstyrene, vinyltoluene, and divinylbenzene, with styrene being preferable.

Besides the above, monomer units derived from monomers that can be copolymerized with the sulfo group-containing aromatic vinyl monomer can be included. Examples of monomers that can form such monomer units include unsaturated carboxylic acid ester monomers (for example, any of the compounds given as examples in relation to the previously described water-soluble polymer (A)), olefin monomers (for example, olefins having a carbon number of not less than 2 and not more than 30 such as ethylene, propylene, 1-butene, and isobutene), and α,β-unsaturated nitrile monomers (for example, acrylonitrile and methacrylonitrile).

In a case in which the water-soluble polymer (B) includes units other than sulfo group-containing aromatic vinyl monomer units, the water-soluble polymer (B) may, for example, be a water-soluble polymer that includes, in addition to sulfo group-containing aromatic vinyl monomer units, one or more types of units selected from unsaturated carboxylic acid amide monomer units (preferably (meth)acrylamide monomer units) and aromatic vinyl monomers (excluding sulfo group-containing monomers). In this case, these units can constitute more than 0 parts by mass and not more than 95 parts by mass in 100 parts by mass of the water-soluble polymer (B), and preferably constitute not less than 5 parts by mass and not more than 95 parts by mass in 100 parts by mass of the water-soluble polymer (B) from a viewpoint of sufficiently obtaining the effects of inclusion of these units.

A water-soluble polymer formed of not less than 5 parts by mass and not more than 95 parts by mass of sulfo group-containing aromatic vinyl monomer units and not less than 5 parts by mass and not more than 95 parts by mass, in total, of one or more types of units selected from unsaturated carboxylic acid amide monomer units (preferably (meth)acrylamide monomer units) and aromatic vinyl monomer (excluding sulfo group-containing monomer) units relative to 100 parts by mass of the water-soluble polymer (B) is preferable, a water-soluble polymer formed of not less than 20 parts by mass and not more than 70 parts by mass of sulfo group-containing aromatic vinyl monomer units and not less than 30 parts by mass and not more than 80 parts by mass, in total, of one or more types of units selected from unsaturated carboxylic acid amide monomer units (preferably (meth)acrylamide monomer units) and aromatic vinyl monomer (excluding sulfo group-containing monomer) units is more preferable, and a water-soluble polymer formed of not less than 30 parts by mass and not more than 60 parts by mass of sulfo group-containing aromatic vinyl monomer units and not less than 40 parts by mass and not more than 70 parts by mass, in total, of one or more types of units selected from unsaturated carboxylic acid amide monomer units (preferably (meth)acrylamide monomer units) and aromatic vinyl monomer (excluding sulfo group-containing monomer) units is even more preferable.

### (Production of water-soluble polymer (B))

The production method of the water-soluble polymer (B) is not specifically limited, and a commonly known method can be adopted. For example, the water-soluble polymer (B) can be produced by polymerizing each monomer in a solvent. The charging ratio of each monomer is normally the same as the ratio of monomer units (structural units) in the water-soluble polymer.

The polymerization can be performed using a polymerization initiator, a polymerization accelerator, an emulsifier, a dispersant, a chain transfer agent, and/or the like. The solution obtained after polymerization may be used to produce the binder composition in that form or may be used to produce the binder composition after performing solvent exchange, addition of optional components, and/or the like.

The solvent is preferably an aqueous solvent and may be water or a mixed solvent of water and a hydrophilic organic solvent. Aqueous solution polymerization using water as a solvent is preferable in terms of safety and that a solvent removal operation is not required. The aqueous solution polymerization can be performed using a polymerization initiator (for example, sodium persulfate, ammonium persulfate, or potassium persulfate), a polymerization accelerator (for example, sodium L-ascorbate or sodium bisulfite), and a chain transfer agent (for example, 1-thioglycerol). The pH of the aqueous solution is preferably adjusted to not lower than 7 and not higher than 9 after polymerization.

### [Binder composition]

### (Weight-average molecular weights of water-soluble polymer (A) and water-soluble polymer (B))

The presently disclosed binder composition contains the water-soluble polymer (A) and the water-soluble polymer (B), and the weight-average molecular weight of the water-soluble polymer (A) is 4 times or more the weight-average molecular weight of the water-soluble polymer (B), and is preferably 8 times or more the weight-average molecular weight of the water-soluble polymer (B), and more preferably 10 times or more the weight-average molecular weight of the water-soluble polymer (B) from viewpoints of active material dispersibility upon formation of a slurry or electrode and polymer strength. Although no specific limitations are placed on the upper limit, the weight-average molecular weight of the water-soluble polymer (A) is normally 1,000 times or less the weight-average molecular weight of the water-soluble polymer (B), and is preferably 100 times or less the weight-average molecular weight of the water-soluble polymer (B) from a viewpoint of stability of a slurry containing the polymers.

The weight-average molecular weight of the water-soluble polymer (B) may, from a viewpoint of improving dispersibility of an electrode active material and the like upon formation of a slurry composition, be set as 2,000 or more, and preferably 10,000 or more, and may be set as 300,000 or less, and preferably 250,000 or less.

The weight-average molecular weight of the water-soluble polymer (A) should be 4 times or more the weight-average molecular weight of the water-soluble polymer (B), but may be set as 1,000,000 or more, and preferably 2,000,000 or more, and may be set as 100,000,000 or less, and preferably 8,000,000 or less from a viewpoint of ensuring preservation stability upon formation of a slurry composition and functionality as a binder in an electrode or secondary battery.

The weight-average molecular weights of the water-soluble polymers can be adjusted through appropriate selection of polymerization conditions (reaction temperature, reaction time, type and amount of initiator, monomer concentration, type and amount of chain transfer agent, etc.).

### (Mass ratio of water-soluble polymer (A) and water-soluble polymer (B))

A mass ratio of the water-soluble polymer (A) and the water-soluble polymer (B) (water-soluble polymer (A)/water-soluble polymer (B)) can be not less than 55/45 and not more than 99/1, preferably not less than 70/30 and not more than 99/1, and more preferably not less than 80/20 and not more than 97/3 from a viewpoint of bringing about high peel strength in an electrode and excellent cycle characteristics in a secondary battery.

The chemical compositions and weight-average molecular weights of the water-soluble polymer (A) and the water-soluble polymer (B) contained in the binder composition can be confirmed by performing fractionation of the composition by gel permeation chromatography (GPC), collecting a sample for each peak, and performing analysis by gas chromatography mass spectrometry (GC-MS). A nuclear magnetic resonance (NMR) method such as ¹H-NMR may also be used in combination therewith in order to determine the proportional contents of monomer units. In the case of a mixture of a high molecular weight component and a low molecular weight component, a chart obtained by GPC typically has bimodal peaks, although this is dependent on the mixing ratio.

### (Solvent)

The binder composition can contain a solvent. The solvent can be an aqueous solvent, and may be water or a mixed solvent of water and a hydrophilic organic solvent. Of these solvents, water is preferable. Examples of hydrophilic organic solvents that may be used include ketones such as diacetone alcohol and γ-butyrolactone; alcohols such as ethanol, isopropanol, and n-propanol; glycol ethers such as propylene glycol monomethyl ether, methyl cellosolve, ethyl cellosolve, ethylene glycol t-butyl ether, butyl cellosolve, 3-methoxy-3-methyl-1-butanol, ethylene glycol monopropyl ether, diethylene glycol monobutyl ether, triethylene glycol monobutyl ether, and dipropylene glycol monomethyl ether; and ethers such as 1,3-dioxolane, 1,4-dioxolane, and tetrahydrofuran. Solvents used in production of the water-soluble polymer (A) and the water-soluble polymer (B) can be contained in that form as the solvent.

### (Other components)

The binder composition can further contain components such as conductive materials, reinforcing materials, leveling agents, viscosity modifiers, additives for electrolyte solution, defoamers, wetting agents, and preservatives to the extent that the disclosed effects are not lost, and examples thereof include those described in WO2012/115096A1. These components may be of a single type or may be a combination of two or more types in a freely selected ratio.

### (Production of binder composition)

The binder composition can be produced by mixing the water-soluble polymer (A), the water-soluble polymer (B), and other optional components such as a solvent. The mixing method may be any commonly known method without any specific limitations. For example, mixing can be performed using a stirrer having a stirring blade or a mixer such as a ball mill, a sand mill, a bead mill, a pigment disperser, a grinding machine, an ultrasonic disperser, a homogenizer, a planetary mixer, a Homo Mixer, or a FILMIX.

The solid content concentration of the binder composition is not specifically limited and can be set as not less than 4 mass% and not more than 50 mass%, for example.

### <Slurry composition for non-aqueous secondary battery electrode>

The presently disclosed slurry composition for a non-aqueous secondary battery electrode contains an electrode active material and the presently disclosed binder composition for a non-aqueous secondary battery. The presently disclosed slurry composition has excellent dispersibility of the electrode active material and the like and also has excellent preservation stability as a result of containing the presently disclosed binder composition. An electrode that includes an electrode mixed material layer formed using the presently disclosed slurry composition has excellent peel strength.

### [Binder composition]

The amount of the presently disclosed binder composition in the slurry composition is not specifically limited and can, for example, be set as an amount such that the total amount of the water-soluble polymer (A) and the water-soluble polymer (B) contained in the slurry composition is not less than 1 part by mass and not more than 5 parts by mass relative to 100 parts by mass of the electrode active material.

### [Electrode active material]

The electrode active material is a material that gives and receives electrons in an electrode of a non-aqueous secondary battery. In the case of a lithium ion secondary battery, the electrode active material is normally a material that can occlude and release lithium. Although the following describes, as one example, a case in which the slurry composition for a non-aqueous secondary battery electrode is a slurry composition for a lithium ion secondary battery electrode, the slurry composition for a non-aqueous secondary battery electrode is not limited to this example.

### (Positive electrode active material)

Any known positive electrode active material may be used as a positive electrode active material for a lithium ion secondary battery without any specific limitations. Examples include lithium-containing cobalt oxide (LiCoO₂), lithium manganate (LiMn₂O₄), lithium-containing nickel oxide (LiNiO₂), a lithium-containing complex oxide of Co-Ni-Mn (Li(Co Mn Ni)O₂), a lithium-containing complex oxide of Ni-Mn-Al, a lithium-containing complex oxide of Ni-Co-Al, olivine-type lithium iron phosphate (LiFePO₄), olivine-type lithium manganese phosphate (LiMnPO₄), a Li₂MnO₃-LiNiO₂-based solid solution, a lithium-rich spinel compound represented by Li₁₊ₓMn₂₋ₓO₄ (0 < x < 2), Li[Ni_{0.17}Li_{0.2}Co_{0.07}Mn_{0.56}]O₂, and LiNi_{0.5}Mn_{1.5}O₄. The amount and particle diameter of the positive electrode active material are not specifically limited and can be the same as those of a conventionally used positive electrode active material. The positive electrode active material may be of a single type or may be a combination of two or more types in a freely selected ratio.

### (Negative electrode active material)

Any known negative electrode active material may be used as a negative electrode active material for a lithium ion secondary battery without any specific limitations. Examples include carbon-based negative electrode active materials, metal-based negative electrode active materials, and negative electrode active materials that are a combination thereof. The negative electrode active material may be of a single type or may be a combination of two or more types in a freely selected ratio.

The term "carbon-based negative electrode active material" refers to an active material having carbon as a main framework into which lithium can be inserted (doped) and examples thereof include carbonaceous materials and graphitic materials.

Examples of carbonaceous materials include graphitizing carbon and non-graphitizing carbon, typified by glassy carbon, which has a structure similar to an amorphous structure.

The graphitizing carbon may be a carbon material having tar pitch obtained from petroleum or coal as a raw material, and examples thereof include coke, mesocarbon microbeads (MCMB), mesophase pitch-based carbon fiber, and pyrolytic vapor-grown carbon fiber.

The non-graphitizing carbon may be pyrolyzed phenolic resin, polyacrylonitrile-based carbon fiber, quasi-isotropic carbon, pyrolyzed furfuryl alcohol resin (PFA), hard carbon, or the like.

Examples of graphitic materials include natural graphite and artificial graphite.

The artificial graphite may, for example, be artificial graphite obtained through heat treatment of carbon containing graphitizing carbon mainly at 2800°C or higher, graphitized MCMB obtained through heat treatment of MCMB at 2000°C or higher, graphitized mesophase pitch-based carbon fiber obtained through heat treatment of mesophase pitch-based carbon fiber at 2000°C or higher, or the like.

A metal-based negative electrode active material is an active material that contains metal, and is normally an active material that includes an element allowing insertion of lithium in the structure thereof and has a theoretical electric capacity per unit mass of 500 mAh/g or more when lithium is inserted. The metal-based active material may, for example, be lithium metal; a simple substance of metal that can form a lithium alloy (for example, Ag, Al, Ba, Bi, Cu, Ga, Ge, In, Ni, P, Pb, Sb, Si, Sn, Sr, Zn, or Ti) or an alloy thereof; or an oxide, sulfide, nitride, silicide, carbide, phosphide, or the like of any thereof.

Of the negative electrode active materials described above, a negative electrode active material containing one or more selected from the group consisting of Si, Sn, Ge, Pb, Al, and Li is preferable. In particular, from a viewpoint of increasing the capacity of a lithium ion secondary battery, a negative electrode active material containing one or more selected from the group consisting of Si, Sn, and Al is preferable, and a negative electrode active material containing Si (silicon-based negative electrode active material) is more preferable. These negative electrode active materials display significant expansion and contraction in accompaniment to charging and discharging of a secondary battery. Even in a case in which an electrode (negative electrode) is produced using such a negative electrode active material, it is possible to produce an electrode (negative electrode) having high peel strength and to cause a secondary battery to display excellent cycle characteristics by using the presently disclosed slurry composition.

From viewpoints of obtaining high energy density and obtaining excellent cycle characteristics in a secondary battery, the elements described above and alloys, oxides, and the like thereof may be set as 5 mass% or more, and preferably 10 mass% or more in the negative electrode active material, and may be set as 40 mass% or less, and preferably 30 mass% or less in the negative electrode active material.

The silicon-based negative electrode active material may, for example, be silicon (Si), a silicon-containing alloy, SiO, SiOₓ, a composite material of conductive carbon and a Si-containing material obtained by coating or combining the Si-containing material with the conductive carbon, or the like. SiOₓ is a compound including one or more of Si, SiO, and SiO₂, where x is normally not less than 0.01 and less than 2.

### [Other components]

The presently disclosed slurry composition can contain other components to the extent that the disclosed effects are not lost. The description relating to the binder composition (inclusive of examples and preferred examples) is applicable to these other components. These other components may be of a single type or may be a combination of two or more types in a freely selected ratio.

### [Production of slurry composition]

The presently disclosed slurry composition can be produced by mixing the electrode active material, the presently disclosed binder composition, and other optional components by a known mixing method. The mixing method is not specifically limited and can be performed using any of the mixers described in relation to production of the binder composition. The slurry composition normally contains a solvent, and this solvent includes solvent that was present in the binder composition. The solvent may be water, an alcohol, a ketone, or the like without any specific limitations.

### <Electrode for non-aqueous secondary battery>

The presently disclosed electrode for a non-aqueous secondary battery includes an electrode mixed material layer formed using the presently disclosed slurry composition. By using the presently disclosed slurry composition, it is possible to produce an electrode having high peel strength.

### [Production of electrode for secondary battery]

In production of the presently disclosed electrode, the electrode mixed material layer can be formed on a current collector through a step of applying the presently disclosed slurry composition onto the current collector (application step) and a step of drying the slurry composition that has been applied onto the current collector to form an electrode mixed material layer on the current collector (drying step), for example.

The method by which the presently disclosed slurry composition is applied onto the current collector can be a commonly known method without any specific limitations. Examples of methods that may be used include doctor blading, dip coating, reverse roll coating, direct roll coating, gravure coating, extrusion coating, and brush coating. The slurry composition may be applied onto just one side of the current collector or may be applied onto both sides of the current collector. The thickness of the slurry coating on the current collector after application but before drying can be set as appropriate in accordance with the thickness of the electrode mixed material layer to be obtained through drying.

Any material having electrical conductivity and electrochemical durability can be used as the current collector onto which the slurry composition is applied without any specific limitations. For example, the current collector may be formed of iron, copper, aluminum, nickel, stainless steel, titanium, tantalum, gold, platinum, or the like. The material of the current collector may be of a single type or may be a combination of two or more types in a freely selected ratio.

The method by which the slurry composition on the current collector is dried can be a commonly known method without any specific limitations. Examples of drying methods that may be used include drying by warm, hot, or low-humidity air; drying in a vacuum; and drying by irradiation with infrared light, electron beams, or the like. Through drying of the presently disclosed slurry composition, an electrode mixed material layer can be formed on the current collector to thereby obtain an electrode that includes the current collector and the electrode mixed material layer.

After the drying step, the electrode mixed material layer may be further subjected to a pressing process by mold pressing, roll pressing, or the like. The pressing process can further improve peel strength of the electrode.

### <Non-aqueous secondary battery>

The presently disclosed non-aqueous secondary battery includes the presently disclosed electrode. For example, the presently disclosed electrode may be used as at least one of a positive electrode and a negative electrode in a non-aqueous secondary battery that includes a positive electrode, a negative electrode, an electrolyte solution, and a separator. Although the following describes, as one example, a case in which the non-aqueous secondary battery is a lithium ion secondary battery, the non-aqueous secondary battery is not limited to this example.

### [Electrodes]

In the case of an electrode other than the presently disclosed electrode, any known electrode that is used in production of a secondary battery can be used without any specific limitations. For example, an electrode obtained by forming an electrode mixed material layer on a current collector by a known production method can be used.

### [Electrolyte solution]

The electrolyte solution is not specifically limited and may be an organic electrolyte solution having a supporting electrolyte dissolved in an organic solvent. A lithium salt may be used as a supporting electrolyte of a lithium ion secondary battery. Examples of lithium salts that may be used include LiPF₆, LiAsF₆, LiBF₄, LiSbF₆, LiAlCl₄, LiClO₄, CF₃SO₃Li, C₄F₉SO₃Li, CF₃COOLi, (CF₃CO)₂NLi, (CF₃SO₂)₂NLi, and (C₂F₅SO₂)NLi. Of these lithium salts, LiPF₆, LiClO₄, and CF₃SO₃Li are preferable in terms of readily dissolving in solvents and displaying a high degree of dissociation, and LiPF₆ is particularly preferable. The electrolyte may be of a single type or may be a combination of two or more types in a freely selected ratio. In general, lithium ion conductivity tends to increase when a supporting electrolyte having a high degree of dissociation is used. Therefore, lithium ion conductivity can be adjusted through the type of supporting electrolyte that is used.

The organic solvent used in the electrolyte solution is not specifically limited so long as the supporting electrolyte can dissolve therein. Examples of organic solvents that may be used in a lithium ion secondary battery include carbonates such as dimethyl carbonate (DMC), ethylene carbonate (EC), diethyl carbonate (DEC), propylene carbonate (PC), butylene carbonate (BC), and ethyl methyl carbonate (EMC); esters such as γ-butyrolactone and methyl formate; ethers such as 1,2-dimethoxyethane and tetrahydrofuran; and sulfur-containing compounds such as sulfolane and dimethyl sulfoxide. A mixture of any of these solvents may be used. Of these solvents, carbonates are preferable due to having high permittivity and a wide stable potential region.

The concentration of the electrolyte in the electrolyte solution may be adjusted as appropriate. Furthermore, known additives may be added to the electrolyte solution.

### [Separator]

The separator is not specifically limited and can be a commonly known separator such as any of those described in JP2012-204303A, for example. Of these separators, a microporous membrane made of polyolefinic resin (polyethylene, polypropylene, polybutene, polyvinyl chloride, etc.) is preferable in terms that such a membrane can reduce the total thickness of the separator, which can increase the proportion of electrode active material inside the secondary battery and increase the volumetric capacity.

### [Production of secondary battery]

The presently disclosed non-aqueous secondary battery can be produced by, for example, stacking the positive electrode and the negative electrode with the separator in-between, performing rolling, folding, or the like of the resultant laminate, as necessary, in accordance with the battery shape so as to place the laminate in a battery container, injecting the electrolyte solution into the battery container, and sealing the battery container. At least one of the positive electrode and the negative electrode used in production is the presently disclosed electrode for a non-aqueous secondary battery. An overcurrent preventing device such as a fuse or a PTC device, an expanded metal, a lead plate, or the like may be provided in the secondary battery, as necessary, in order to prevent pressure increase inside the secondary battery and occurrence of overcharging or overdischarging. The shape of the secondary battery may be a coin type, button type, sheet type, cylinder type, prismatic type, flat type, or the like, for example, without any specific limitations.

### EXAMPLES

The following provides a more specific description of the present disclosure based on examples. However, the present disclosure is not limited to the following examples. In the following description, "%", "ppm", and "parts" used in expressing quantities are by mass, unless otherwise specified.

Moreover, in the case of a polymer that is produced through copolymerization of a plurality of types of monomers, the proportion in the polymer constituted by a monomer unit that is formed through polymerization of a given monomer is normally, unless otherwise specified, the same as the ratio (charging ratio) of the given monomer among all monomers used in polymerization of the polymer.

In the examples and comparative examples, the following methods were used to measure and evaluate the weight-average molecular weight of a polymer, the preservation stability of a slurry composition, the peel strength of a negative electrode, and the cycle characteristics of a secondary battery.

### <Weight-average molecular weight>

The weight-average molecular weight of a polymer was measured by gel permeation chromatography (GPC). First, a polymer was added to approximately 5 mL of an eluent such that the solid content concentration thereof was approximately 0.5 g/L, a stirring bar was placed therein at 25°C, and 30 minutes of stirring was performed at 300 rpm using a magnetic stirrer to cause dissolution. Once dissolution of the polymer was visually confirmed, filtration was performed gently using a 0.45 µm filter to produce a measurement sample. The weight-average molecular weight was then calculated as a standard substance-equivalent value by preparing a calibration curve using a standard substance.

The measurement conditions were as follows.

### [Measurement conditions]

Column: Produced by Showa Denko K.K.; product name: Shodex OHpak (SB-G, SB-807HQ, SB-806MHQ)
Eluent: 0.1 M Tris buffer solution (0.1 M potassium chloride added)
Flow rate: 0.5 mL/min
Sample concentration: 0.05 g/L (solid content concentration)
Injection volume: 200 µL
Column temperature: 40°C
Detector: Differential refractive index detector RI (produced by Tosoh Corporation; product name: RI-8020)
Standard substance: Monodisperse pullulan (produced by Showa Denko K.K.)

### <Preservation stability of slurry composition>

A produced slurry composition was transferred into a 20 mL transparent plastic vessel and was left therein. Change in state thereof (sedimentation and gelation) over time was evaluated visually and by touch. Specifically, sedimentation was judged to have occurred in a case in which the presence of a transparent supernatant was confirmed in an upper portion of the slurry composition and/or in a case in which a mass was confirmed in a lower portion of the slurry composition using a spatula. Moreover, gelation was judged to have occurred in a case in which fluidity could not be confirmed even upon tilting of the plastic vessel. Such changes over time were evaluated in accordance with the following standard.
A: Sedimentation and gelation both not confirmed at point after being left for 72 hours
B: Sedimentation and/or gelation confirmed after being left for not less than 48 hours and less than 72 hours
C: Sedimentation and/or gelation confirmed after being left for not less than 24 hours and less than 48 hours
D: Sedimentation and/or gelation confirmed after being left for less than 24 hours

### <Peel strength of negative electrode>

A produced negative electrode was cut out as a test specimen of 50 mm in length by 10 mm in width.

Cellophane tape was affixed to the negative electrode mixed material layer surface of this test specimen. Note that tape prescribed by JIS Z1522 was used as the cellophane tape. The test specimen was placed on a horizontal test stage with the surface at the negative electrode mixed material layer-side thereof facing downward, and the cellophane tape was fixed to the test stage.

Next, one end of the current collector was pulled vertically upward at a speed of 50 mm/min to peel off the current collector, and the stress (N/m) during this peeling was measured. A total of three measurements were made in this manner. An average value of the measurements was calculated, was taken to be the peel strength of the negative electrode, and was evaluated by the following standard.
A: Peel strength of 7 N/m or more
B: Peel strength of not less than 5 N/m and less than 7 N/m
C: Peel strength of not less than 4 N/m and less than 5 N/m
D: Peel strength of less than 4 N/m

### <Cycle characteristics of secondary battery>

A produced lithium ion secondary battery was left at rest in a 25°C environment for 24 hours after injection of electrolyte solution. Thereafter, the lithium ion secondary battery was subjected to a charge/discharge operation of charging to a cell voltage of 4.2 V and discharging to a cell voltage of 2.75 V by a 0.1C constant-current method, and the initial discharge capacity C0 was measured. In addition, the lithium ion secondary battery was repeatedly charged to a cell voltage of 4.2 V and discharged to a cell voltage of 2.75 V by a 0.5C constant-current method in a 25°C environment, capacity measurement was then performed by the same operation as for C0, and the discharge capacity C1 after 100 cycles was measured. A capacity maintenance rate C2 was calculated according to a formula: C2(%) = (C1/C0) × 100. A larger value indicates better cycle characteristics.
A: Capacity maintenance rate C2 of 80% or more
B: Capacity maintenance rate C2 of not less than 70% and less than 80%
C: Capacity maintenance rate C2 of not less than 50% and less than 70%
D: Capacity maintenance rate C2 of less than 50%

### <Example 1>

### [Synthesis of polymer a]

A 10 L septum-equipped flask was charged with 770 parts of deionized water. The deionized water was heated to a temperature of 40°C, and the inside of the flask was purged with nitrogen gas at a flow rate of 100 mL/min. Next, 35 parts of acrylic acid as an unsaturated carboxylic acid monomer, 40 parts of acrylamide as a (meth)acrylamide monomer, and 25 parts of N-hydroxyethylacrylamide as a hydroxyl group-containing vinyl monomer were mixed and were injected into the flask by a syringe. Thereafter, 9.3 parts of a 10.0% aqueous solution of sodium L-ascorbate as a polymerization accelerator was loaded by a syringe, and, 10 minutes later, 7.5 parts of a 20.0% aqueous solution of ammonium persulfate as a polymerization initiator was added into the flask by a syringe. Once 1 hour had passed from the start of the reaction, the temperature was raised to 55°C, and the polymerization reaction was caused to proceed. After 2 hours, 1.2 parts of a 10.0% aqueous solution of sodium bisulfite as a polymerization accelerator was loaded by a syringe, and, 10 minutes later, 1.25 parts of a 20.0% aqueous solution of potassium persulfate as a polymerization initiator was added into the flask by a syringe. After 3 hours, 1.2 parts of a 10.0% aqueous solution of sodium bisulfite as a polymerization accelerator was loaded by a syringe, and, 10 minutes later, 1.25 parts of a 20.0% aqueous solution of potassium persulfate as a polymerization initiator was added into the flask by a syringe. After 4 hours, 1.2 parts of a 10.0% aqueous solution of sodium bisulfite as a polymerization accelerator was loaded by a syringe, and, 10 minutes later, 1.25 parts of a 20.0% aqueous solution of potassium persulfate as a polymerization initiator was added into the flask by a syringe. After 5 hours, 1.2 parts of a 10.0% aqueous solution of sodium bisulfite as a polymerization accelerator was loaded by a syringe, and, 10 minutes later, 1.25 parts of a 20.0% aqueous solution of potassium persulfate as a polymerization initiator was added into the flask by a syringe.

After 6 hours, a reaction inhibitor was added, and the flask was opened to air to end the polymerization reaction. The pH of the product was subsequently adjusted to 8 using a 10% aqueous solution of lithium hydroxide to yield a polymer a.

Note that the chemical composition of the obtained polymer a was the same as the ratio (charging ratio) of each monomer among all monomers used in polymerization of the polymer. Moreover, the polymer a was water-soluble according to the definition in the present specification. The weight-average molecular weight of the polymer a is shown in Table 1.

### [Synthesis of polymer b]

A 1 L septum-equipped flask was charged with 148 parts of deionized water. The deionized water was heated to a temperature of 40°C, and the inside of the flask was purged with nitrogen gas at a flow rate of 100 mL/min. Next, 42 parts of a 12% aqueous solution of sodium p-styrenesulfonate was injected into the flask by a syringe. Thereafter, 1.47 parts of a 10% aqueous solution of 1-thioglycerol as a chain transfer agent was added and stirred. In addition, 2.9 parts of a 10.0% aqueous solution of sodium L-ascorbate as a polymerization accelerator was loaded by a syringe, and, 10 minutes later, 3.75 parts of a 10.0% aqueous solution of ammonium persulfate as a polymerization initiator was added into the flask by a syringe. Once 1 hour had passed from the start of the reaction, the temperature was raised to 55°C, and the polymerization reaction was caused to proceed.

After 6 hours, a reaction inhibitor was added, and the flask was opened to air to end the polymerization reaction. The pH of the product was subsequently adjusted to 8 using a 10% aqueous solution of sodium hydroxide to yield a polymer b. The polymer b was water-soluble according to the definition in the present specification. The weight-average molecular weight of the polymer b is shown in Table 1.

### <Production of binder composition for secondary battery>

A binder composition was produced by mixing an aqueous solution of the polymer a and an aqueous solution of the polymer b that were obtained as described above in amounts such that the mass ratio of the polymer a and the polymer b (ratio of amounts in terms of solid content) was a mass ratio indicated in Table 1. The solid content concentration in the binder composition was 10 mass%.

### <Production of slurry composition for secondary battery negative electrode>

A planetary mixer equipped with a disper blade was charged with 77.8 parts of artificial graphite (volume-average particle diameter: 24.5 µm; specific surface area: 4 m²/g) and 19.2 parts of SiOₓ (particle diameter: 5 µm; x = 1) as negative electrode active materials and 3.0 parts in terms of solid content of the binder composition obtained as described above. These materials were adjusted to a solid content concentration of 63.3% with deionized water and were mixed at room temperature for 60 minutes. Next, the solid content concentration was adjusted to 49.6% with deionized water, and a further 15 minutes of mixing was performed to yield a mixture. The obtained mixture was subjected to defoaming to obtain a slurry composition. Preservation stability was evaluated for the obtained slurry composition. The result is shown in Table 1.

### <Production of negative electrode>

The slurry composition for a secondary battery negative electrode obtained as described above was applied onto copper foil (current collector) of 16 µm in thickness using a comma coater such as to have a thickness after drying of 105 µm and a coating weight of 10 mg/cm². The copper foil with the slurry composition applied thereon was conveyed inside an oven having a temperature of 80°C for 2 minutes and an oven having a temperature of 120°C for 2 minutes at a speed of 0.5 m/min so as to dry the slurry composition on the copper foil and obtain a negative electrode web. The negative electrode web was rolled by roll pressing to obtain a negative electrode having a negative electrode mixed material layer thickness of 80 µm. Peel strength was measured for this negative electrode. The result is shown in Table 1.

### <Production of positive electrode>

A slurry composition for a secondary battery positive electrode was produced by mixing 100 parts of LiCoO₂ (volume-average particle diameter: 12 µm) as a positive electrode active material, 2 parts of acetylene black (produced by Denka Company Limited; product name: HS-100) as a conductive material, and 2 parts in terms of solid content of polyvinylidene fluoride (produced by Kureha Corporation; product name: #7208) as a binder for a positive electrode, adding N-methyl-2-pyrrolidone to adjust the total solid content concentration to 70 mass%, and mixing these materials in a planetary mixer.

The obtained slurry composition was applied onto aluminum foil (current collector) of 20 µm in thickness using a comma coater such as to have a thickness after drying of approximately 150 µm. The slurry composition was dried by conveying the aluminum foil inside an oven having a temperature of 60°C for 2 minutes at a speed of 0.5 m/min. Thereafter, 2 minutes of heat treatment was performed at a temperature of 120°C to obtain a positive electrode web. The obtained positive electrode web was rolled by roll pressing to obtain a positive electrode having a positive electrode mixed material layer thickness of 80 µm.

### <Production of secondary battery>

A battery container was produced using a laminate film formed of an aluminum sheet and polypropylene resin coating both sides of the aluminum sheet. Next, the mixed material layer was removed from the ends of the positive electrode and the negative electrode obtained as described above such as to form a location at which the copper foil or the aluminum foil was exposed. A Ni tab was welded to the location at which the aluminum foil of the positive electrode was exposed, and a Cu tab was welded to the location at which the copper foil of the negative electrode was exposed. The tab-equipped positive electrode and the tab-equipped negative electrode that were obtained in this manner were stacked with a separator formed of a microporous membrane made of polyethylene sandwiched in-between. The orientations of surfaces of the electrodes were set such that the surface at the mixed material layer-side of the positive electrode and the surface at the mixed material layer-side of the negative electrode were facing each other. The stacked electrodes and separator were wound up and were then housed inside the battery container. Electrolyte solution was then injected into the battery container. The electrolyte solution was produced by mixing ethylene carbonate and diethyl carbonate in a volume ratio of 1:2 at a temperature of 25°C to obtain a mixed solvent and dissolving LiPF₆ in the mixed solvent such as to have a concentration of 1 mol/L.

Next, the laminate film was sealed to thereby produce a laminate cell-type lithium ion secondary battery. Cycle characteristics were evaluated for the obtained lithium ion secondary battery. The result is shown in Table 1.

### <Example 2>

A binder composition, a slurry composition, and a secondary battery were produced in the same way as in Example 1 with the exception that in production of the binder composition, the mass ratio of the polymer a and the polymer b (ratio of amounts in terms of solid content) was set as indicated in Table 1. The results are shown in Table 1.

### <Example 3>

Production of a polymer a was performed using monomers indicated in Table 1. Specifically, polymerization was performed in the same way as in Example 1 with the exception that 10 parts of acrylic acid as an unsaturated carboxylic acid monomer and 90 parts of acrylamide as a (meth)acrylamide monomer were used as monomers.

The obtained polymer a was water-soluble according to the definition in the present specification.

A binder composition, a slurry composition, and a secondary battery were produced in the same way as in Example 1 with the exception that this polymer a was used and that the mass ratio of the polymer a and the polymer b (ratio of amounts in terms of solid content) was set as indicated in Table 1. The results are shown in Table 1.

### <Example 4>

Production of a polymer b was performed using monomers indicated in Table 1. Specifically, polymerization was performed in the same way as in Example 1 with the exception that 18.75 parts of a 12% aqueous solution of sodium p-styrenesulfonate and 2.75 parts of acrylamide were used as monomers.

The obtained polymer b was water-soluble according to the definition in the present specification, and the chemical composition of the polymer b was the same as the ratio (charging ratio) of each monomer among all monomers used in polymerization.

A binder composition, a slurry composition, and a secondary battery were produced in the same way as in Example 1 with the exception that this polymer b was used and that the mass ratio of the polymer a and the polymer b (ratio of amounts in terms of solid content) was set as indicated in Table 1. The results are shown in Table 1.

### <Example 5>

Production of a polymer a was performed as described below using monomers indicated in Table 1. Specifically, polymerization was performed in the same way as in Example 1 with the exception that 70 parts of methacrylic acid as an unsaturated carboxylic acid monomer and 30 parts of acrylamide as a (meth)acrylamide monomer were used as monomers.

The obtained polymer a was water-soluble according to the definition in the present specification, and the chemical composition of the polymer a was the same as the ratio (charging ratio) of each monomer among all monomers used in polymerization.

A binder composition, a slurry composition, and a secondary battery were produced in the same way as in Example 1 with the exception that this polymer a was used and that the mass ratio of the polymer a and the polymer b (ratio of amounts in terms of solid content) was set as indicated in Table 1. The results are shown in Table 1.

### <Example 6>

Production of a polymer b was performed using a monomer indicated in Table 1. Specifically, polymerization was performed in the same way as in Example 1 with the exception that 83.3 parts of a 12% aqueous solution of sodium p-styrenesulfonate was used as a monomer, 2.94 parts of a 10% aqueous solution of 1-thioglycerol was used as a chain transfer agent, 1.64 parts of a 1.0% aqueous solution of sodium L-ascorbate was used as a polymerization accelerator, and 2.5 parts of a 2.0% aqueous solution of ammonium persulfate was used as a polymerization initiator.

The polymer b was water-soluble according to the definition in the present specification.

A binder composition, a slurry composition, and a secondary battery were produced in the same way as in Example 1 with the exception that this polymer b was used and that the mass ratio of the polymer a and the polymer b (ratio of amounts in terms of solid content) was set as indicated in Table 1. The results are shown in Table 1.

### <Example 7>

A binder composition, a slurry composition, and a secondary battery were produced in the same way as in Example 1 with the exception that the polymer b produced in Example 6 was used and that the mass ratio of the polymer a and the polymer b (ratio of amounts in terms of solid content) was set as indicated in Table 1. The results are shown in Table 1.

### <Example 8>

Production of a polymer a was performed using a monomer indicated in Table 1. Specifically, polymerization was performed in the same way as in Example 1 with the exception that 100 parts of acrylic acid was used as an unsaturated carboxylic acid monomer.

The obtained polymer a was water-soluble according to the definition in the present specification.

A binder composition, a slurry composition, and a secondary battery were produced in the same way as in Example 1 with the exception that this polymer a was used and that the mass ratio of the polymer a and the polymer b (ratio of amounts in terms of solid content) was set as indicated in Table 1. The results are shown in Table 1.

### <Example 9>

Production of a polymer b was performed using monomers indicated in Table 1. Specifically, polymerization was performed in the same way as in Example 1 with the exception that 75 parts of a 12% aqueous solution of sodium p-styrenesulfonate and 1 part of styrene were used as monomers.

The obtained polymer b was water-soluble according to the definition in the present specification, and the chemical composition of the polymer b was the same as the ratio (charging ratio) of each monomer among all monomers used in polymerization.

A binder composition, a slurry composition, and a secondary battery were produced in the same way as in Example 1 with the exception that this polymer b was used and that the mass ratio of the polymer a and the polymer b (ratio of amounts in terms of solid content) was set as indicated in Table 1. The results are shown in Table 1.

### <Comparative Example 1>

A binder composition, a slurry composition, and a secondary battery were produced in the same way as in Example 1 with the exception that only the polymer a was used in production of the binder composition. The results are shown in Table 1.

### <Comparative Example 2>

A binder composition, a slurry composition, and a secondary battery were produced in the same way as in Example 1 with the exception that only the polymer b was used in production of the binder composition. The results are shown in Table 1.

### <Comparative Example 3>

Production of a polymer a was performed using monomers indicated in Table 1. Specifically, polymerization was performed in the same way as in Example 1 with the exception that 25 parts of sodium p-styrenesulfonate was used instead of N-hydroxyethylacrylamide used as a hydroxyl group-containing vinyl monomer.

The obtained polymer a was water-soluble according to the definition in the present specification, and the chemical composition of the polymer a was the same as the ratio (charging ratio) of each monomer among all monomers used in polymerization. The polymer a was a copolymer of acrylic acid, which is an unsaturated carboxylic acid monomer, and styrene, which is a sulfo group-containing aromatic vinyl monomer.

A binder composition, a slurry composition, and a secondary battery were produced in the same way as in Example 1 with the exception that only this polymer a was used. The results are shown in Table 1.

### <Comparative Example 4>

Production of a polymer b was performed using monomers indicated in Table 1. Specifically, polymerization was performed in the same way as in Example 1 with the exception that 83.3 parts of a 12% aqueous solution of sodium p-styrenesulfonate was used as a monomer, 0.82 parts of a 1.0% aqueous solution of sodium L-ascorbate was used as a polymerization accelerator, and 1.25 parts of a 2.0% aqueous solution of ammonium persulfate was used as a polymerization initiator, and that a chain transfer agent was not added.

The polymer b was water-soluble according to the definition in the present specification.

A binder composition, a slurry composition, and a secondary battery were produced in the same way as in Example 1 with the exception that this polymer b was used. The results are shown in Table 1.

In Table 1:
"AA" indicates acrylic acid;
"MAA" indicates methacrylic acid;
"AAmid" indicates acrylamide;
"HEAAmid" indicates 2-hydroxyethylacrylamide;
"SSNa" indicates sodium p-styrenesulfonate;
"St" indicates styrene; and
"Li" indicates lithium ion.

The counter ion given in relation to an unsaturated carboxylic acid indicates the counter ion of an unsaturated carboxylic acid monomer unit in a polymer a.

**Table 1**

| Item | Key points | | Example 1 | Example 2 | Example 3 | Example 4 | Example 5 | Example 6 | Example 7 | Example 8 | Example 9 | Comparative Example 1 | Comparative Example 2 | Comparative Example 3 | Comparative Example 4 |
|---|---|---|---|---|---|---|---|---|---|---|---|---|---|---|---|
| Polymer a | Unsaturated carboxylic acid | Type | AA | AA | AA | AA | MAA | AA | AA | AA | AA | AA | - | AA | AA |
| | | Proportion [mass%] | 35 | 35 | 10 | 35 | 70 | 35 | 35 | 100 | 35 | 35 | - | 35 | 35 |
| | | Counter ion | Li | Li | Li | Li | Li | Li | Li | - | Li | Li | - | Li | Li |
| | Copolymerized component 1 | Type | AAmid | AAmid | AAmid | AAmid | AAmid | AAmid | AAmid | - | AAmid | AAmid | - | AAmid | AAmid |
| | | Proportion [mass%] | 40 | 40 | 90 | 40 | 30 | 40 | 40 | - | 40 | 40 | - | 40 | 40 |
| | Copolymerized component 2 | Type | HEAAmid | HEAAmid | - | HEAAmid | - | HEAAmid | HEAAmid | - | HEAAmid | HEAAmid | - | SSNa | HEAAmid |
| | | Proportion [mass%] | 25 | 25 | - | 25 | - | 25 | 25 | - | 25 | 25 | - | 25 | 25 |
| | Weight-average molecular weight | | 2,060,000 | 2,060,000 | 4,500,000 | 2,060,000 | 3,100,000 | 2,060,000 | 2,060,000 | 3,200,000 | 2,060,000 | 2,060,000 | - | 2,060,000 | 2,060,000 |
| Polymer b | Sulfo group-containing aromatic vinyl | Type | SSNa | SSNa | SSNa | SSNa | SSNa | SSNa | SSNa | SSNa | SSNa | - | SSNa | - | SSNa |
| | | Proportion [mass%] | 100 | 100 | 100 | 45 | 100 | 100 | 100 | 100 | 90 | - | 100 | - | 100 |
| | Copolymerized component 1 | Type | - | - | - | AAmid | - | - | - | - | St | - | - | - | - |
| | | Proportion [mass%] | - | - | - | 55 | - | - | - | - | 10 | - | - | - | - |
| | Weight-average molecular weight | | 136,000 | 136,000 | 136,000 | 190,000 | 136,000 | 240,000 | 240,000 | 136,000 | 220,000 | - | 136,000 | - | 1,010,000 |
| Binder composition | Mass of polymer a/Mass of polymer b | | 90/10 | 95/5 | 95/5 | 95/5 | 90/10 | 90/10 | 60/40 | 95/5 | 95/5 | 100/0 | - | 100/0 | 90/10 |
| | Weight-average molecular weight of polymer a relative to weight-average molecular weight of polymer b | | 15 | 15 | 33 | 11 | 23 | 9 | 9 | 24 | 9 | - | - | - | 2 |
| Active material | Alloy-based active material | Type | SiOx | SiOx | SiOx | SiOx | SiOₓ | SiOx | SiOx | SiOx | SiOx | SiOx | SiOx | SiOx | SiOx |
| | | Amount in electrode [mass%] | 20 | 20 | 20 | 20 | 20 | 20 | 20 | 20 | 20 | 20 | 20 | 20 | 20 |
| Peel strength of negative electrode | | | A | A | A | B | A | A | B | A | A | C | D | A | C |
| Preservation stability of slurry composition | | | A | A | A | A | A | A | B | B | A | A | D | A | A |
| Cycle characteristics of secondary battery | | | A | A | B | B | A | B | B | A | B | B | D | C | A |

It can be seen from Table 1 that electrodes obtained using the binder compositions of Examples 1 to 9 had excellent peel strength, and that secondary batteries including these electrodes as negative electrodes had excellent cycle characteristics.

The binder composition of Comparative Example 1 in which only a water-soluble polymer (A) was used did not result in electrode peel strength of as high a level as in the examples, and the binder composition of Comparative Example 2 in which only a water-soluble polymer (B) was used resulted in poor preservation stability of a slurry composition and noticeably poor electrode peel strength and cycle characteristics. The binder composition of Comparative Example 3 in which a copolymer of an unsaturated carboxylic acid monomer and a sulfo group-containing aromatic vinyl monomer was used did not result in secondary battery cycle characteristics of as high a level as in the examples, and the binder composition of Comparative Example 4 in which the difference between the weight-average molecular weights of a water-soluble polymer (A) and a water-soluble polymer (B) was small did not result in electrode peel strength of as high a level as in the examples.

### INDUSTRIAL APPLICABILITY

According to the present disclosure, a binder composition is provided that can result in high peel strength in an electrode and excellent cycle characteristics in a secondary battery.

## Claims

1. A binder composition for a non-aqueous secondary battery comprising a water-soluble polymer (A) and a water-soluble polymer (B), wherein
the water-soluble polymer (A) is formed of one or more types of units selected from the group consisting of unsaturated carboxylic acid monomer units, unsaturated carboxylic acid amide monomer units, unsaturated carboxylic acid ester monomer units, hydroxyl group-containing vinyl monomer units, and vinyl alcohol structural units, and includes 5 parts by mass or more of unsaturated carboxylic acid monomer units in 100 parts by mass of the water-soluble polymer (A),
the water-soluble polymer (B) is formed of one or more types of ethylenically unsaturated monomer units, and includes 5 parts by mass or more of sulfo group-containing aromatic vinyl monomer units in 100 parts by mass of the water-soluble polymer (B), and
weight-average molecular weight of the water-soluble polymer (A) is 4 times or more weight-average molecular weight of the water-soluble polymer (B).

2. The binder composition for a non-aqueous secondary battery according to claim 1, wherein a mass ratio of the water-soluble polymer (A) relative to the water-soluble polymer (B) is not less than 55/45 and not more than 99/1.

3. The binder composition for a non-aqueous secondary battery according to claim 1 or 2, wherein the weight-average molecular weight of the water-soluble polymer (B) is not less than 2,000 and not more than 300,000.

4. The binder composition for a non-aqueous secondary battery according to any one of claims 1 to 3, wherein the water-soluble polymer (A) is formed of one or more types of units selected from the group consisting of unsaturated carboxylic acid monomer units, (meth)acrylamide monomer units, hydroxyl group-containing vinyl monomer units, and vinyl alcohol structural units, and includes 5 parts by mass or more of unsaturated carboxylic acid monomer units in 100 parts by mass of the water-soluble polymer (A).

5. The binder composition for a non-aqueous secondary battery according to any one of claims 1 to 4, wherein the water-soluble polymer (B) is formed of one or more types of units selected from the group consisting of (meth)acrylamide monomer units and aromatic vinyl monomer units, and includes 5 parts by mass or more of sulfo group-containing aromatic vinyl monomer units in 100 parts by mass of the water-soluble polymer (B).

6. A slurry composition for a non-aqueous secondary battery electrode comprising: an electrode active material; and the binder composition for a non-aqueous secondary battery according to any one of claims 1 to 5.

7. The slurry composition for a non-aqueous secondary battery electrode according to claim 6, wherein the electrode active material is a negative electrode active material containing one or more selected from the group consisting of Si, Sn, Ge, Pb, Al, and Li.

8. An electrode for a non-aqueous secondary battery comprising an electrode mixed material layer formed using the slurry composition for a non-aqueous secondary battery electrode according to claim 6 or 7.

9. A non-aqueous secondary battery comprising the electrode for a non-aqueous secondary battery according to claim 8.
